# FASCICULE DE BREVET EUROPEEN

(11) **EP 2 719 592 B1**
(45) Date de publication et mention de la délivrance du brevet: **11.09.2019**
(21) Numéro de dépôt: 13186693.1
(22) Date de dépôt: 30.09.2013
(51) Int. Cl.: B60T 8/17, B64C 25/46

(54) **Architecture de système de freinage électromécanique**
Aufbau eines elektromechanischen Bremssystems
An electromechanical braking system architecture

(30) Priorité: 09.10.2012 FR 1259633
(43) Date de publication de la demande: 16.04.2014
(73) Titulaire: Safran Landing Systems, 78140 Vélizy-Villacoublay (FR)
(72) Inventeur: Thibault, Julien, 78140 VELIZY-VILLACOUBLAY (FR)
(74) Mandataire: Parzy, Benjamin Alain

(56) Documents cités:
- EP-A1- 1 547 918
- FR-A1- 2 952 009
- FR-A1- 2 964 625

## Description

L'invention concerne une architecture de système de freinage pour aéronef équipé de roues freinées au moyen de freins à actionneurs électromécaniques.

### ARRIERE PLAN DE L'INVENTION

On connaît, notamment des documents FR2964625 et FR2952009, des architectures de système de freinage électromécanique d'aéronef comportant un certain nombre de contrôleurs d'actionneurs (ou EMACs, pour Electro Mechanical Actuator) et de calculateurs de freinage (BSC, pour Brake System Controller, ou EBCU, pour Electronic Braking Control Unit), et dans lesquelles les actionneurs électromécaniques du frein de chaque roue dite « freinée » (car équipée d'un frein) sont regroupés en deux groupes complémentaires de sorte qu'un premier groupe d'actionneurs est contrôlé par un premier contrôleur ne contrôlant que ces actionneurs, et un second groupe d'actionneurs est contrôlé par un second contrôleur ne contrôlant que ces actionneurs.

Les actionneurs de chaque frein sont dimensionnés pour qu'en cas de défaillance d'un contrôleur, les actionneurs du même frein contrôlés par l'autre contrôleur puissent compenser au moins partiellement la défaillance de manière à freiner l'aéronef en toute sécurité.

Dans ces architectures, chaque contrôleur est connecté électriquement à au moins un calculateur de freinage, éventuellement via un concentrateur de données distant (ou RDC, pour Remote Data Concentrator) comme c'est le cas dans le document FR2964625. Une fonction de protection d'anti-glissement, destinée à soulager l'effort de freinage en cas de glissement d'une roue freinée, est mise en oeuvre dans les calculateurs de freinage. Pour ce faire, chaque roue freinée comporte un capteur de vitesse de rotation de la roue relié soit à un unique calculateur de freinage, soit à un unique concentrateur de données qui transmet la vitesse de rotation à un ou plusieurs calculateurs de freinage.

Ces architectures présentent deux inconvénients principaux.

Tout d'abord, on constate qu'une défaillance du calculateur de freinage ou du concentrateur de données auquel est connecté le capteur de vitesse d'une roue conduit à la perte totale de la fonction de protection d'anti-glissement pour ladite roue.

En outre, dans une architecture où les deux contrôleurs associés à une roue freinée seraient connectés à un unique calculateur de freinage, une défaillance de ce calculateur de freinage conduirait à une perte totale du freinage de la roue. Pour assurer une fiabilité satisfaisante du freinage, il est donc nécessaire d'utiliser au moins deux calculateurs de freinage qui sont chacun connectés à tous les contrôleurs, éventuellement via des concentrateurs de données comme c'est le cas dans le document FR2964625, où les deux calculateurs de freinage sont connectés via deux concentrateurs de données à huit contrôleurs contrôlant seize actionneurs répartis sur quatre roues. Cette solution est bien sûr coûteuse et peu avantageuse en terme de masse du fait de la multiplication des équipements et des câbles associés.

### OBJET DE L'INVENTION

L'invention a pour objet de proposer une architecture de freinage assurant une fiabilité satisfaisante à la fois au système de freinage et à la fonction de protection d'anti-glissement, sans multiplier les équipements composant ce système.

### RESUME DE L'INVENTION

En vue de la réalisation de ce but, on propose une architecture de système de freinage pour aéronef équipé de roues freinées au moyen de freins à actionneurs électromécaniques, le système de freinage comportant des contrôleurs pour distribuer une puissance électrique aux actionneurs en réponse à une consigne de freinage, chaque contrôleur étant associé à des actionneurs d'un même frein. Selon l'invention, chaque contrôleur comprend une entrée pour recevoir une information de vitesse de rotation de la roue freinée par les actionneurs associés audit contrôleur, le contrôleur comportant des moyens de traitement pour moduler la puissance transmise aux actionneurs en fonction de la vitesse de rotation de la roue en vue d'assurer une protection d'anti-glissement.

Les contrôleurs (ou EMAC) sont donc agencés pour mettre en oeuvre une fonction de protection d'anti-glissement traditionnellement réalisée dans un calculateur de freinage. Cette fonction peut être implémentée dans un contrôleur sans modification matérielle majeure, car les contrôleurs traditionnels possèdent une puissance de calcul importante nécessaire au contrôle des moteurs électriques des actionneurs. Ainsi, il est possible de redonder les fonctions réalisées traditionnellement par un contrôleur et par un calculateur de freinage en utilisant uniquement deux contrôleurs.

On propose aussi une architecture conforme à l'architecture décrite plus tôt, dans laquelle les actionneurs d'un même frein sont regroupés en un premier et un deuxième groupe complémentaires d'actionneurs de sorte que le premier groupe d'actionneurs est contrôlé par un premier contrôleur qui ne contrôle que ces actionneurs et que le deuxième groupe d'actionneurs est contrôlé par un contrôleur qui ne contrôle que ces actionneurs, et dans lequel le premier et le deuxième contrôleur reçoivent tous deux l'information de vitesse de rotation de la roue freinée.

On assure ainsi une fiabilité satisfaisante à la fois au système de freinage et à la fonction de protection d'anti-glissement. En effet, une défaillance d'un contrôleur d'un frein d'une roue a pour conséquence une perte seulement partielle du freinage de la roue pouvant être compensée par les actionneurs de l'autre contrôleur du frein. De plus, comme les deux contrôleurs sont connectés au capteur de vitesse de rotation de la roue, le contrôleur non défaillant peut réaliser la protection d'anti-glissement et l'appliquer sur les actionneurs restants qu'il contrôle.

On propose enfin une architecture conforme à la précédente architecture, dans laquelle le premier et le deuxième contrôleur sont tous deux connectés directement à un capteur de vitesse de rotation qui leur transmet l'information de vitesse de rotation de la roue freinée.

Ainsi, l'information de vitesse de rotation ne transite pas par un concentrateur de données, ce qui permet de diminuer le temps de transmission de l'information de vitesse et améliore la précision de la fonction de protection d'anti-glissement.

### BREVE DESCRIPTION DES DESSINS

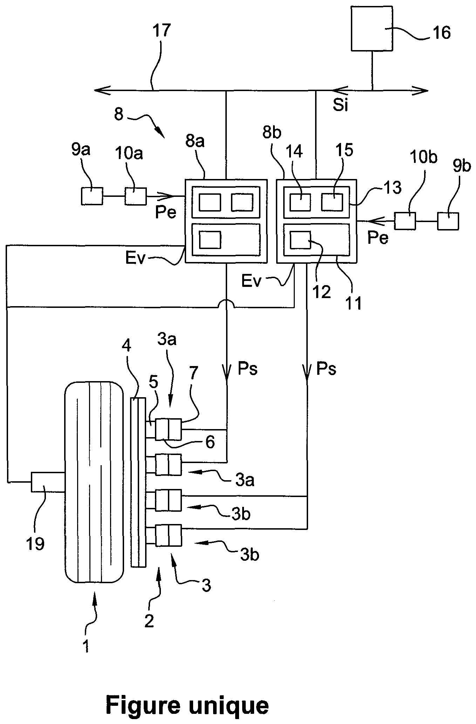

L'invention sera mieux comprise à la lumière de la description qui suit en référence à une unique figure représentant une architecture de freinage selon un mode particulier de réalisation de l'invention.

### DESCRIPTION DETAILLEE DE L'INVENTION

L'architecture de système de freinage de l'invention est ici décrite en relation avec un aéronef comportant un certain nombre d'atterrisseurs équipés de roues freinées semblables à celle représentée sur la figure unique.

Chaque roue freinée 1 est équipée d'un frein électromécanique 2 qui comprend ici quatre actionneurs électromécaniques 3, en l'occurrence deux actionneurs 3a et deux actionneurs 3b, adaptés à presser sélectivement une pile de disques 4 en regard. Chaque actionneur 3 comporte un poussoir 5 manoeuvré par un moteur électrique 6 et est équipé d'un organe de blocage de parc 7 permettant de bloquer le poussoir 5 en position lorsque l'actionneur 3 a été bloqué pour exercer un effort de parc sur les disques 4.

L'architecture comporte ici deux contrôleur d'actionneurs (ou EMAC) 8, en l'occurrence un premier contrôleur 8a et un deuxième contrôleur 8b, associés à chaque roue 1, chaque contrôleur 8 recevant une puissance électrique d'entrée Pe provenant d'un premier et d'un second bus de puissance alternative 9a, 9b de l'aéronef, via des boîtiers d'alimentation 10a, 10b transformant cette puissance alternative en une puissance continue.

Les deux actionneurs 3a sont connectés électriquement au premier contrôleur 8a et contrôlés par le premier contrôleur 8a, qui ne contrôle aucun autre actionneur, et les deux actionneurs 3b du frein 2 sont connectés électriquement au second contrôleur 8b et contrôlés par le second contrôleur 8b, qui ne contrôle aucun autre actionneur.

Chaque contrôleur 8 comporte une unité de puissance 11 comprenant un onduleur 12, et des moyens de traitement 13 comprenant un module de commande 14 et un module de calcul 15.

L'unité de puissance 11 a pour fonction de transformer la puissance électrique d'entrée Pe en une puissance triphasée Ps adaptée au contrôles des moteurs électriques 6 des actionneurs 3a, 3b, et à moduler la puissance triphasée Ps en réponse à un ordre de freinage fourni par le module de commande 14.

Les ordres de freinage délivrés par le module de commande 14 sont élaborés en fonction de signaux Si représentatifs d'instructions de freinage émis depuis le poste de pilotage 16. Les signaux représentatifs d'instructions de freinage sont transmis aux contrôleurs 8a, 8b par un bus de données numériques 17 auquel chaque contrôleur 8a, 8b est connecté.

Dans un mode de freinage dit « mode de parc », le module de commande 14 reçoit directement une instruction de freinage de parc émise suite à l'actionnement par le pilote d'un sélecteur de parc, et génère un ordre de freinage de parc pour que l'unité de puissance 11 alimente les moteurs électriques 6 des actionneurs 3a, 3b pour faire appliquer par ceux-ci un effort de parc prédéterminé sur la pile de disques 4, puis commande sur chaque actionneur 3a, 3b l'organe de blocage 7 du poussoir 5 pour bloquer le poussoir 5 en position après application de l'effort de parc, puis recommence régulièrement ces étapes pour ajuster l'effort de parc, celui-ci pouvant avoir diminué du fait notamment de dilatations subies par le frein.

Dans un mode de freinage dit « mode normal », le module de calcul 15 reçoit une instruction de freinage normal, et génère une consigne de freinage à destination du module de commande 14. Cette instruction de freinage normal est émise suite à l'actionnement par le pilote des pédales de frein ou d'une manette dite autobrake commandant un freinage automatique, ou bien provient d'un autre équipement de l'aéronef, par exemple d'un calculateur de pilotage automatique. L'instruction de freinage normal est corrigée par l'application d'une fonction de protection d'anti-glissement mise en oeuvre par l'unité de calcul 15, et destinée à soulager l'effort de freinage normal sur la roue 1 en cas de glissement de celle-ci.

Chaque contrôleur 8a, 8b reçoit pour cela une mesure de vitesse représentative de la vitesse de la roue 1 via une entrée Ev de capteur de vitesse. La mesure de vitesse est fournie par un capteur de vitesse 19 (de type tachymètre magnétique par exemple) de la roue qui est ici connecté directement aux deux contrôleurs 8a, 8b associés à la roue 1.

Ainsi, dans l'architecture de l'invention, chaque contrôleur 8a, 8b remplit à la fois les fonctions réalisées par un contrôleur traditionnel et par un calculateur de freinage traditionnel.

Comme les contrôleurs traditionnels comportent des moyens de traitement ayant une capacité de calcul importante nécessaire au contrôle des moteurs électriques des actionneurs, l'ajout de la fonction de protection d'anti-glissement est relativement aisé à implémenter. Au niveau matériel, la principale différence entre les contrôleurs 8a, 8b ici décrits et un contrôleur traditionnel concerne donc l'ajout de l'entrée Ev de capteur de vitesse.

On note qu'en cas de défaillance d'un contrôleur 8a ou 8b, le freinage de la roue 1 est toujours assuré par le contrôleur restant qui contrôle deux actionneurs 3a ou 3b sur les quatre actionneurs du frein électromécanique 2 de la roue 1. On prévoit de compenser partiellement cette défaillance en demandant aux actionneurs restant alimentés de fournir un surcroît d'effort de freinage. Ainsi, on dimensionnera chaque actionneur 3a, 3b pour pouvoir développer, au moins de façon occasionnelle, un effort de freinage équivalent à celui développé par deux actionneurs d'un frein dont tous les actionneurs sont alimentés lors d'un freinage dans des conditions nominales.

De plus, comme chaque contrôleur 8a, 8b est relié au capteur de vitesse 19, une défaillance d'un contrôleur n'empêche pas l'autre contrôleur d'appliquer la fonction de protection d'anti-glissement pour réguler l'effort de freinage en fonction du glissement. La disponibilité de la fonction de protection d'anti-glissement est donc améliorée par rapport à une architecture traditionnelle.

L'invention n'est pas limitée au mode de réalisation particulier qui vient d'être décrit, mais, bien au contraire, couvre toute variante entrant dans le cadre de l'invention tel que défini par les revendications.

Bien que l'on ait illustré l'invention en munissant le frein équipant la roue de quatre actionneurs connectés à deux contrôleurs, l'invention s'applique bien sûr à un nombre d'actionneurs différent reliés à un nombre de contrôleurs différent, chaque contrôleur étant connecté à des actionneurs d'un même frein.

Bien que l'on ait illustré l'invention en reliant directement le capteur de vitesse de rotation de la roue aux contrôleurs, il est bien sûr possible de connecter le capteur aux contrôleurs via un équipement de type concentrateur de données, l'information de vitesse pouvant alors éventuellement être transmise via le bus de données numériques.

Bien que l'on ait muni chaque roue freinée d'un unique capteur de vitesse de rotation de la roue, il aurait été possible de prévoir plusieurs capteurs de vitesse par roue, chaque capteur étant relié à un unique contrôleur et transmettant au contrôleur auquel il est connecté l'information de vitesse de rotation de la roue de façon indépendante (c'est-à-dire via un canal de communication distinct d'un canal utilisé par un autre capteur). Ainsi, en équipant la roue de deux capteurs de vitesse, et en reliant chaque capteur de façon indépendante à un unique contrôleur, on améliorerait la disponibilité de la fonction de protection d'anti-glissement, qui, en cas de panne d'un capteur, pourrait être appliquée sur les actionneurs associés au contrôleur relié au capteur opérationnel.

Bien que l'on ait défini un module de commande et un module de calcul dans les moyens de traitement, les deux modules peuvent bien sûr être intégrés dans un unique composant, par exemple dans un microcontrôleur de type PowerPC.

## Revendications

1. Architecture de système de freinage pour aéronef équipé de roues freinées (1) au moyen de freins (2) à actionneurs électromécaniques (3), le système de freinage comportant des contrôleurs (8) pour distribuer une puissance électrique (Ps) aux actionneurs (3) en réponse à une consigne de freinage, chaque contrôleur (8) étant associé à des actionneurs d'un même frein, **caractérisée en ce que** chaque contrôleur (8) comprend une entrée (Ev) pour recevoir une information de vitesse de rotation de la roue freinée (1) par les actionneurs associés audit contrôleur, le contrôleur comportant des moyens de traitement (13) pour moduler la puissance transmise aux actionneurs en fonction de la vitesse de rotation de la roue en vue d'assurer une protection d'anti-glissement.

2. Architecture selon la revendication 1, dans laquelle les actionneurs (3) d'un même frein (2) sont regroupés en un premier (3a) et un deuxième groupe (3b) complémentaires d'actionneurs de sorte que le premier groupe d'actionneurs (3a) est contrôlé par un premier contrôleur (8a) qui ne contrôle que ces actionneurs et que le deuxième groupe d'actionneurs (3b) est contrôlé par un contrôleur (8b) qui ne contrôle que ces actionneurs, et dans lequel le premier et le deuxième contrôleur reçoivent tous deux l'information de vitesse de rotation de la roue freinée (1) .

3. Architecture selon la revendication 2, dans laquelle le premier (8a) et le deuxième contrôleur (8b) sont tous deux connectés directement à un capteur de vitesse de rotation (19) qui leur transmet l'information de vitesse de rotation de la roue freinée (1).

4. Architecture selon la revendication 2, dans laquelle le premier (8a) et le deuxième contrôleur (8b) sont chacun connectés à un capteur de vitesse de rotation différent de la roue freinée (1), chaque capteur transmettant au contrôleur auquel il est connecté l'information de vitesse de rotation de la roue (1) de façon indépendante.

## Patentansprüche

1. Aufbau eines Bremssystems für ein Luftfahrzeug, das mit gebremsten Rädern (1) ausgestattet ist, die mittels Bremsen (2) mit elektromechanischen Aktoren (3) gebremst werden, wobei das Bremssystem Regler (8) umfasst, um eine elektrische Leistung (Ps) an die Aktoren (3) in Antwort auf einen Bremssollwert zu verteilen, wobei jeder Regler (8) mit Aktoren einer selben Bremse verbunden ist, **dadurch gekennzeichnet, dass** jeder Regler (8) einen Eingang (Ev) umfasst, um eine Drehgeschwindigkeitsinformation des gebremsten Rades (1), das von den mit dem Regler verbundenen Aktoren gebremst wird, zu empfangen, wobei der Regler Verarbeitungsmittel (13) umfasst, um die an die Aktoren übertragene Leistung abhängig von der Drehgeschwindigkeitsinformation des Rades zu modulieren, um so einen Antischlupf-Schutz zu gewährleisten.

2. Aufbau nach Anspruch 1, bei dem die Aktoren (3) einer selben Bremse (2) in eine erste Gruppe (3a) und eine zweite Gruppe (3b) von komplementären Aktoren zusammengefasst sind, so dass die erste Gruppe (3a) von Aktoren von einem ersten Regler (8a) gesteuert wird, der nur diese Aktoren steuert, und die zweite Gruppe (3b) von Aktoren von einem Regler (8b) gesteuert wird, der nur diese Aktoren steuert, und bei dem der erste und der zweite Regler alle beide die Drehgeschwindigkeitsinformation des gebremsten Rades (1) empfangen.

3. Aufbau nach Anspruch 2, bei dem der erste Regler (8a) und der zweite Regler (8b) alle beide direkt mit einem Drehgeschwindigkeitssensor (19) verbunden sind, der ihnen die Drehgeschwindigkeitsinformation des gebremsten Rades (1) überträgt.

4. Aufbau nach Anspruch 2, bei dem der erste Regler (8a) und der zweite Regler (8b) jeweils mit einem anderen Drehgeschwindigkeitssensor des gebremsten Rades (1) verbunden sind, wobei jeder Sensor auf unabhängige Weise dem Regler, mit dem er verbunden ist, die Drehgeschwindigkeitsinformation des Rades (1) überträgt.

## Claims

1. A braking system architecture for an aircraft having wheels (1) braked by means of respective brakes (2), each brake having a plurality of electromechanical actuators (3), the braking system having controllers (8) for distributing electric power (Ps) to the actuators (3) in response to a braking setpoint, each controller (8) being associated with some of the actuators of any given brake, the architecture being **characterized in that** each controller (8) has an input (Ev) for receiving information about the rotary speed of the wheel (1) braked by the actuators associated with said controller, the controller including processor means (13) for modulating the power transmitted to the actuators as a function of the speed of rotation of the wheel in order to provide anti-skid protection.

2. An architecture according to claim 1, wherein the actuators (3) of a given brake (2) are grouped together in first and second complementary actuator groups (3a, 3b) so that the actuators of the first group (3a) are controlled by a first controller (8a) that controls those actuators only and so that the actuators of the second group of actuators (3b) are controlled by a controller (8b) that controls those actuators only, and wherein both of the first and second controllers receive the information about the speed of rotation of the braked wheel (1).

3. An architecture according to claim 2, wherein the first and second controllers (8a, 8b) are both connected directly to a rotary speed sensor (19) that transmits information to them about the speed of rotation of the braked wheel (1).

4. An architecture according to claim 2, wherein the first and second controllers (8a, 8b) are each connected to a different rotary speed sensor of the braked wheel (1), each sensor independently transmitting information to the controller to which it is connected about the speed of rotation of the wheel (1).
